# EUROPEAN PATENT SPECIFICATION

(11) **EP 4 475 211 B1**
(45) Date of publication and mention of the grant of the patent: **28.05.2025**
(21) Application number: 24165412.8
(22) Date of filing: 22.03.2024
(51) Int. Cl.: H01M 4/133, H01M 4/136, H01M 4/36, H01M 4/58, H01M 4/587, H01M 10/0525, H01M 10/0567

(54) **RECHARGEABLE BATTERY**
WIEDERAUFLADBARE BATTERIE
BATTERIE RECHARGEABLE

(30) Priority: 05.06.2023 KR 20230072449
(43) Date of publication of application: 11.12.2024
(73) Proprietor: Samsung SDI Co., Ltd., Yongin-si, Gyeonggi-do 17084 (KR)
(72) Inventor: Oh, Seungryong, 17084 Gyeonggi-do (KR); Kim, Myunghoon, 17084 Yongin-si, Gyeonggi-do (KR); Kim, Aeran, 17084 Yongin-si, Gyeonggi-do (KR); Kim, Yunhee, 17084 Yongin-si, Gyeonggi-do (KR); Park, Injun, 17084 Yongin-si, Gyeonggi-do (KR); Shin, Jeongmin, 17084 Yongin-si, Gyeonggi-do (KR)
(74) Representative: Gulde & Partner

(56) References cited:
- CN-A- 113 328 141
- US-A1- 2023 098 836

## Description

### BACKGROUND

### 1. Field

One or more embodiments of the present disclosure relate to a rechargeable lithium battery.

### 2. Description of the Related Art

A rechargeable lithium battery may be recharged and has three or more times higher energy density per unit weight than a comparable lead storage (leadacid) battery, a comparable nickel-cadmium battery, a comparable nickel-hydrogen battery, a comparable nickel-zinc battery and/or the like. The rechargeable lithium battery may be highly charged (e.g., to a relatively high energy density) and thus, is commercially manufactured for a laptop, a cell phone, an electric tool, an electric bike, and/or the like. Researches on improvement of the rechargeable lithium battery (e.g., to provide additional energy density) have been actively made.

The rechargeable lithium battery is manufactured by injecting an electrolyte into a (its) battery cell, which includes a positive electrode including a positive electrode active material capable of intercalating/deintercalating lithium and a negative electrode including a negative electrode active material capable of intercalating/deintercalating lithium.

One of the recent development directions for a rechargeable lithium battery is to increase energy density, which may impact the range of safe operating conditions for the battery. In this regard, a method of applying a Si-C composite or a mixture thereof with a carbon-based compound as a negative electrode active material has been studied.

However, as a content of the Si-based active material in a total negative electrode active material increases, there arise complications in that a loss of electrolyte may rapidly increase, a resistance of the rechargeable lithium battery may increase at room temperature and/or high temperature, and a cycle-life may decrease.

Accordingly, it is required to implement (or there is a desire for the implementation of) an electrolyte with an improved safety profile that avoids deteriorating performance at room temperature and/or high temperature.

### SUMMARY

The invention is defined by the appended claims. The description that follows is subjected to this limitation. Any disclosure lying outside the scope of said claims is only intended for illustrative as well as comparative purposes. Aspects of embodiments are directed toward a rechargeable lithium battery that has relatively high energy density, suppresses an increase in resistance of the rechargeable lithium battery at room temperature and/or high temperature, and ensures cycle-life characteristics. Additional aspects will be set forth in part in the description which follows and, in part, will be apparent from the description, or may be learned by practice of the presented embodiments of the disclosure.

According to the present invention there is provided a rechargeable lithium battery including a positive electrode, a negative electrode, and an electrolyte, wherein the electrolyte includes a non-aqueous organic solvent, a lithium salt, a first additive, and a second additive, and the negative electrode includes a negative electrode active material including a Si-C composite mixed with a separate carbon-based compound.

The rechargeable lithium battery according to some example embodiments exhibits high energy density by applying the negative electrode active material including a Si-C composite mixed with a separate carbon-based compound. The rechargeable lithium battery according to some example embodiments prevents or protects from an increase in resistance at room temperature and/or high temperature and secures cycle-life characteristics by applying the electrolyte including two types (kinds) of additives.

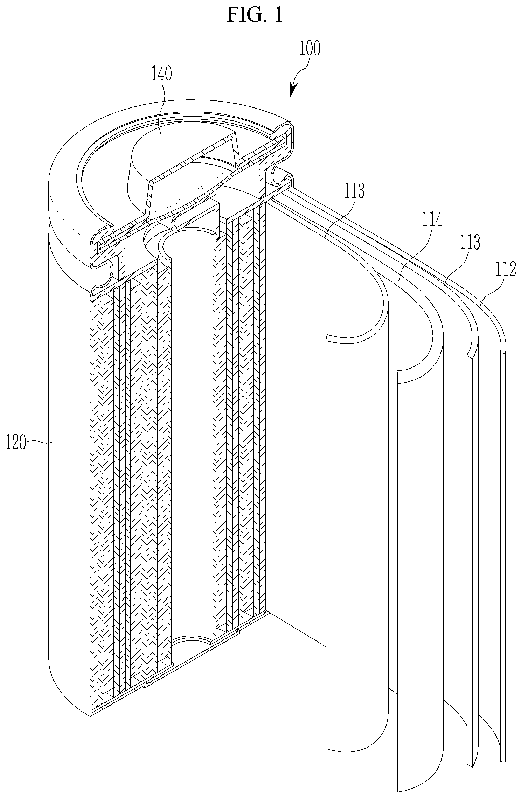

### BRIEF DESCRIPTION OF THE DRAWING

The drawing is a schematic view showing a rechargeable lithium battery according to some example embodiments of the invention.

### DETAILED DESCRIPTION

Hereinafter, a rechargeable lithium battery according to some example embodiments of the present disclosure will be described in more detail with reference to the attached drawing, wherein like reference numerals refer to like elements throughout, and duplicative descriptions thereof may not be provided. In this regard, the present embodiments may be modified to have different forms and should not be construed as being limited to the descriptions set forth herein.

As utilized herein, the term "and/or" includes any and all combinations of one or more of the associated listed items. Expressions such as "at least one of," if preceding a list of elements, modify the entire list of elements and do not modify the individual elements of the list.

If it is described that an element is "on," "connected to," or "coupled to" another element, it will be understood that the element may be provided directly on another element or still another element may be interposed therebetween. On the other hand, if it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

As utilized herein, the singular forms "a," "an," and "the" are intended to include the plural forms, including "at least one," unless the content clearly indicates otherwise. As used herein, expressions such as "at least one," "one of," and "selected from," if preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As utilized herein, the term "and/or" includes any and all combinations of one or more of the associated listed items. The terms "include," "includes," "including," "comprise," "comprises," "comprising," "having," "has," and/or "have" if utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawing. For example, if a device in the drawings is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

The term "combination(s) thereof" may include a mixture, a laminate, a complex, a copolymer, an alloy, a blend, a reactant of constituents, and/or the like.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

As utilized herein, the term "particle diameter" of particles refers to an average diameter if particles are spherical and refers to an average major axis length if particles are non-spherical. A particle diameter of particles may be measured utilizing a particle size analyzer (PSA). A "particle diameter" of particles is, for example, an "average particle diameter." An average particle diameter refers to a median particle diameter (D50). The median particle diameter (D50) is a particle size corresponding to a 50 % cumulative volume if a particle size distribution measured through a laser diffraction method is calculated from particles having a smaller particle size. In some embodiments, a "particle diameter" or an "average particle diameter" may be measured from a transmission electron microscope (TEM) image, a scanning electron microscope (SEM) image, and/or the like.

D50 refers to a particle size corresponding to a 50 % cumulative volume if a particle size distribution measured through a laser diffraction method is calculated from particles having a smaller particle size.

D90 refers to a particle size corresponding to a 90 % cumulative volume if a particle size distribution measured through a laser diffraction method is calculated from particles having a smaller particle size.

D10 refers to a particle size corresponding to a 10 % cumulative volume if a particle size distribution measured through a laser diffraction method is calculated from particles having a smaller particle size.

The term "metal" as utilized herein includes all of metals and metalloids such as silicon and germanium in an elemental or ionic state.

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The term "positive electrode" as utilized herein refers to an electrode at which electrochemical reduction and lithiation occur during a discharging process.

The term "negative electrode" as utilized herein refers to an electrode at which electrochemical oxidation and delithiation occur during a discharging process.

As utilized herein, if a definition is not otherwise provided, "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, and/or combinations thereof.

In one or more embodiments of the present disclosure, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments of the present disclosure, "substituted" may refer to replacement of at least one hydrogen of a substituent or a compound by deuterium, a halogen group, a C1 to C20 alkyl group, a C6 to C30 aryl group, a C1 to C10 fluoroalkyl group, or a cyano group. In some embodiments of the present disclosure, "substituted" may refer to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments of the present disclosure, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

Hereinafter, a negative electrode active material and a rechargeable lithium battery including the same according to one or more embodiments will be described in more detail.

A rechargeable lithium battery includes a positive electrode, a negative electrode, and an electrolyte, wherein the electrolyte includes a non-aqueous organic solvent, a lithium salt, a first additive, and a second additive. The negative electrode includes a negative electrode active material including a Si-C composite mixed with a separate carbon-based compound.

The rechargeable lithium battery exhibits high energy density by applying the negative electrode active material including a Si-C composite mixed with a separate carbon-based compound. By applying an electrolyte including two types (kinds) of additives, the rechargeable lithium battery prevents (or protects from) an increase in resistance that may be suppressed or reduced at room temperature and/or high temperature while also secures cycle-life characteristics.

A description of the electrolyte including the two types (kinds) of additives is disclosed in more detail herein.

The first additive is or include a compound represented by Chemical Formula 1 that may stabilize the lithium salt to suppress or reduce side reactions of the electrolyte. The second additive is or include a compound represented by Chemical Formula 2 that may be absorbed on the surface of the positive electrode. For example, absorption may occur but (e.g., through) coordination of a lone pair of electrons (e.g., on nitrogen atoms in the second additive structure) with a transition metal to stabilize the positive electrode. The absorption (e.g., coordination) may suppress or reduce side reactions (e.g., that result in precipitation of the transition metal) to improve cycle-life and high temperature characteristics of the rechargeable battery.

In some embodiments, the two types (kinds) of additives are mutually complementary to each other (e.g., electron donor and electron acceptor) and may have synergistic advantage if utilized together. For example, compared with if either one of the two types (kinds) of additives is utilized alone, if the two types (kinds) of additives are utilized together, a rechargeable lithium battery may experience a suppressed or reduced increase in resistance at room temperature and/or a high temperature and may secure suitable or achieve improved cycle-life characteristics.

The first additive includes a compound represented by Chemical Formula 1:

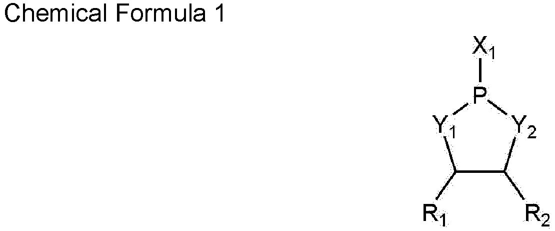

In the description of Chemical Formula 1:
X₁ is a halogen atom, for example, a fluorine atom.
Y₁ and Y₂ are each independently O or S, for example, both (e.g., simultaneously) may be O.

A representative example of the first additive may be a compound represented by Chemical Formula 1-1-1:

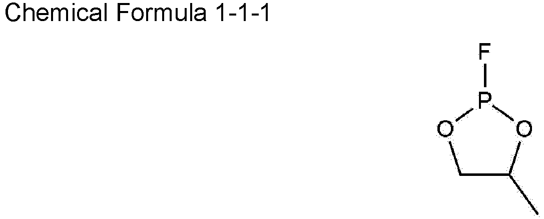

A content of the first additive in 100 wt% of the electrolyte may be greater than or equal to 0.05 wt%, greater than or equal to 0.1 wt%, or greater than or equal to 0.5 wt%; and may be less than or equal to 3 wt% or less than or equal to 2 wt%. Within this range, an effect of improving high temperature characteristics by the first additive may occur (e.g., be significantly exhibited).

The second additive includes a compound represented by Chemical Formula 2, a derivative thereof, or an adduct thereof.

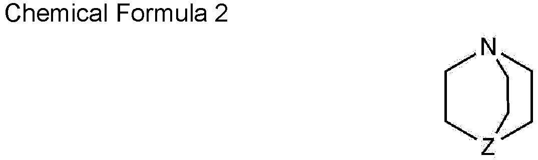

In Chemical Formula 2, Z is N or CH.

In Chemical Formula 2, if Z is N, the second additive is a compound represented by Chemical Formula 2-1-1. Additionally, if Z in Chemical Formula 2 is CH, the second additive is a compound represented by Chemical Formula 2-1-2.

The adduct of Chemical Formula 2 may include an adduct of trimethyl aluminum, sulfur dioxide, borate, or hydrosilane and the compound represented by Chemical Formula 2 (e.g., an adduct obtained by adding trimethyl aluminum, sulfur dioxide, borate, or hydrosilane to the compound represented by Chemical Formula 2). For example, the adduct of Chemical Formula 2 may be a compound represented by Chemical Formula 2-1 or 2-2.

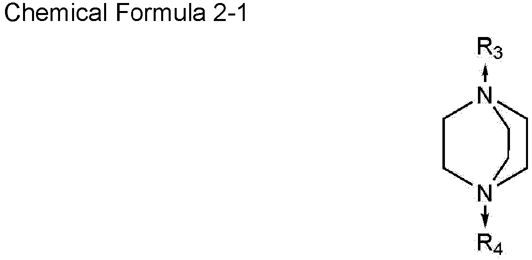

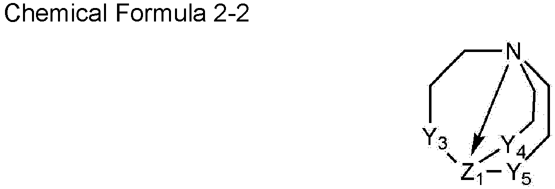

In Chemical Formulas 2-1 and 2-2, the "arrows (→)" are drawn from a side to donate (e.g., provide) electrons to a side to accept (e.g., receive) the electrons and refer to coordination bonds.

R₃ and R₄ may each independently be trimethylaluminum or sulfur dioxide. Y₃ to Y₅ may each independently be O or S, for example, all of Y₃ to Y₅ may be O. Z₁ may be B or SiH.

Representative examples of the second additive may be represented by at least one of Chemical Formula 2-1-1, Chemical Formula 2-1-2, Chemical Formula 2-2-1, Chemical Formula 2-2-2, Chemical Formula 2-3-1, or Chemical Formula 2-3-2:

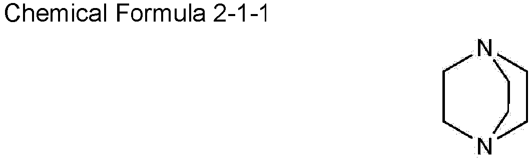

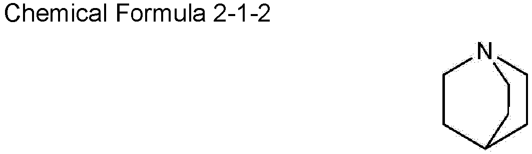

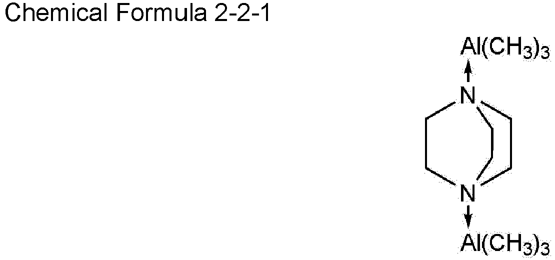

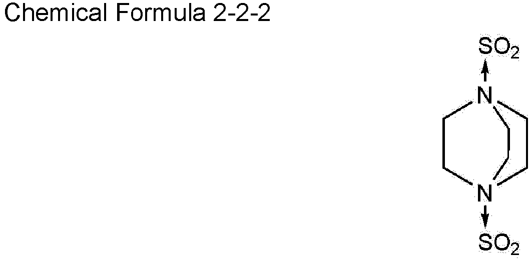

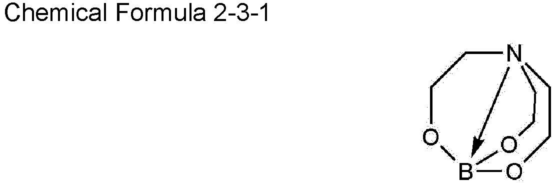

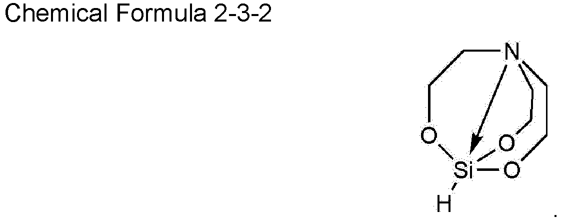

The content of the second additive in 100 wt% of the electrolyte may be greater than or equal to 0.05 wt%, greater than or equal to 0.1 wt%, or greater than or equal to 0.5 wt%; and may be less than or equal to 3 wt% or less than or equal to 2 wt%. Within this range, an effect of improving high temperature characteristics by the second additive may occur (e.g., be significantly exhibited).

For example, a weight ratio of the first additive and the second additive may be 1:0.1 to 1:3. In this way, if the second additive is utilized in an amount of 0.1 to 1.3 parts by weight based on 1 part by weight of the first additive, the synergy effect of the two types (kinds) of additives may be further increased. For example, if the second additive is utilized in an amount of 0.1 to 1.3 parts by weight based on 1 part by weight of the first additive, more suppression or reduction of an increase in resistance at room temperature and/or a high temperature and more improved cycle-life characteristics may occur.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include at least one selected from among ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include at least one selected from among methyl acetate, ethyl acetate, n-propyl acetate, t-butyl acetate, methylpropionate, ethyl propionate, propylpropionate, decanolide, mevalonolactone, caprolactone, and/or the like. The ether-based solvent may include at least one selected from among dibutyl ether, tetraglyme, diglyme, dimethoxyethane, 2-methyltetrahydrofuran, tetrahydrofuran, and/or the like. The ketone-based solvent may include at least one selected from among cyclohexanone and/or the like. The alcohol-based solvent may include at least one selected from among ethyl alcohol, isopropyl alcohol, and/or the like. Examples of the aprotic solvent include nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, sulfolanes, and/or the like.

The non-aqueous organic solvent may be utilized alone or in combination with one or more of them, and if utilized in combination with one or more, a mixing ratio may be appropriately adjusted according to the desired or suitable battery performance, which is well understood by those skilled in the art.

The carbonate-based solvent may be prepared by mixing a cyclic carbonate and a chain carbonate. The cyclic carbonate and chain carbonate may be mixed together in a volume ratio of 5:95 to 50:50. If the mixture is utilized as an electrolyte, it may have enhanced performance (e.g., the mixture may provide enhanced performance to the electrolyte and/or the rechargeable lithium battery).

For example, ethylene carbonate (EC) may be utilized as the cyclic carbonate, and ethylmethyl carbonate (EMC) and dimethyl carbonate (DMC) may be utilized as the chain carbonate.

For example, the non-aqueous organic solvent may include a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) are mixed is mixed in a volume ratio of EC:EMC:DMC = 1:0.5:0.5 to 1:0.5:10, which may improve performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

The aromatic hydrocarbon-based solvent may be an aromatic hydrocarbon-based compound represented by Chemical Formula 3.

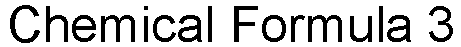

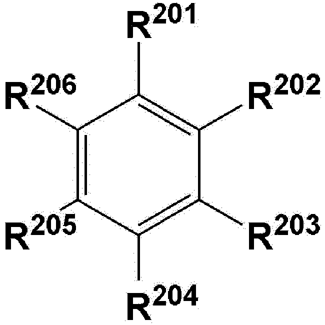

In Chemical Formula 3, R²⁰¹ to R²⁰⁶ may each independently be the same or different and are selected from among hydrogen, a halogen, a C1 to C10 alkyl group, a haloalkyl group, and one or more combinations thereof.

Examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

The electrolyte may further include vinylene carbonate, vinyl ethylene carbonate, and/or an ethylene-based carbonate-based compound of Chemical Formula 4, to improve cycle-life of a battery as a cycle-life improving additive.

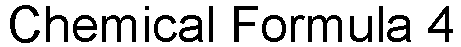

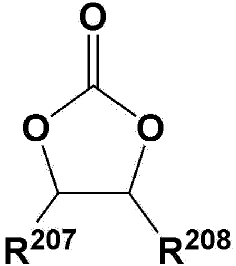

In Chemical Formula 4, R²⁰⁷ and R²⁰⁸ may each independently be the same or different and are selected from among hydrogen, a halogen, a cyano group (CN), a nitro group (NO₂), or a C1 to C5 fluoroalkyl group, provided that at least one of R²⁰⁷ and R²⁰⁸ is a halogen, a cyano group (CN), a nitro group (NO₂), or a C1 to C5 fluoroalkyl group, and R²⁰⁷ and R²⁰⁸ are not concurrently (e.g., simultaneously) hydrogen.

Examples of the ethylene carbonate-based compound include difluoro ethylene carbonate, chloroethylene carbonate, dichloroethylene carbonate, bromoethylene carbonate, dibromoethylene carbonate, nitroethylene carbonate, cyanoethylene carbonate and/or fluoroethylene carbonate. The amount of the additive for improving cycle-life may be utilized within an appropriate or suitable range.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, for example an integer of 1 to 20, LiCl, Lil, and/or LiB(C₂O₄)₂ (lithium bis(oxalato) borate: LiBOB). The lithium salt may be utilized in a concentration in a range of 0.1 M to 2.0 M. If the lithium salt is included at the above concentration range, an electrolyte may have excellent or suitable performance and lithium ion mobility due to optimal or suitable electrolyte conductivity and viscosity.

The negative electrode includes a negative electrode current collector and a negative electrode active material layer including a negative electrode active material formed on the negative electrode current collector.

The negative electrode active material includes a first negative electrode active material and a second negative electrode active material. In some embodiments, the first negative electrode active material includes a Si-C composite and a first carbon-based negative electrode active material. In some embodiments, the Si-C composite includes a Si-based active material (e.g., silicon particles). In some embodiments, the second negative electrode active material includes a second carbon-based negative electrode active material.

The first negative electrode active material and the second negative electrode active material may be included in the form of a mixture, in which case the first negative electrode active material and the second negative electrode active material may be included in a weight ratio of 1:99 to 99:1, or 1:99 to 80:20, or 1:99 to 60:40.

An average particle diameter of the Si-based active material (e.g., constituting the first negative electrode active material) may be 50 nm to 200 nm. If the average particle diameter of the Si-based active material is within the described range, volume expansion that occurs during charging and discharging can be suppressed or reduced, and disconnection of the conductive path due to particle crushing during charging and discharging can be prevented or reduced.

The first carbon-based negative electrode active material (e.g., comprising (e.g., constituting) the first negative electrode active material) may be a carbon material that reversibly intercalates/deintercalates the lithium ions and may be one that is commonly or suitably utilized in a rechargeable lithium battery. Representative examples of the first carbon-based negative electrode active material may include crystalline carbon, amorphous carbon, or a combination thereof. Examples of the crystalline carbon may include graphite such as irregular, plate-shaped, flake, spherical or fibrous natural graphite or artificial graphite, and examples of the amorphous carbon may include soft carbon or hard carbon, a mesophase pitch carbonized product, calcined coke, and/or the like. For example, the first carbon-based negative electrode active material (e.g., comprising (e.g., constituting) the first negative electrode active material) may be crystalline carbon.

A weight ratio of the Si-based active material to the first carbon-based negative electrode active material (e.g., comprising (e.g., constituting) the first negative electrode active material) may be 1:99 to 60:40, specifically 1:99 to 50:50, and more specifically 1:99 to 30:70.

The first negative electrode active material may further include a shell around (e.g., surrounding) the surface of the Si-C composite, and the shell may include amorphous carbon. The amorphous carbon may include soft carbon, hard carbon, a mesophase pitch carbonized product, calcined coke, or a mixture thereof. The amorphous carbon may be included in an amount of 1 to 50 parts by weight, for example, 5 to 50 parts by weight, or 10 to 50 parts by weight, based on 100 parts by weight of the carbon-based active material.

The second carbon-based negative electrode active material may include crystalline carbon. The crystalline carbon may include, for example, graphite, and for example, may include natural graphite, artificial graphite, or a mixture thereof. The crystalline carbon may have an average particle diameter of 5 to 30 µm. As utilized herein, the average particle diameter may be a particle size (D50) at a volume ratio of 50% in a cumulative size-distribution curve.

A total content of the first negative electrode active material and the second negative electrode active material in the negative electrode active material layer may be 95 to 99 wt% based on a total weight of the negative electrode active material layer.

In some example embodiments, the negative electrode active material layer may include a binder, and optionally a conductive material. In the negative electrode active material layer, the amount of the binder may be 1 to 5 wt% based on a total weight of the negative electrode active material layer. If it further includes the conductive material, it may include 90 to 98 wt% of the negative electrode active material, 1 to 5 wt% of the binder, and 1 to 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or one or more combinations thereof.

The water-soluble binder may be a rubber-based binder or a polymer resin binder. The rubber-based binder may be selected from among a styrene-butadiene rubber, an acrylated styrene-butadiene rubber (SBR), an acrylonitrile-butadiene rubber, an acrylic rubber, a butyl rubber, a fluorine rubber, and one or more combinations thereof. The polymer resin binder may be selected from among polytetrafluoroethylene, ethylene propylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and one or more combinations thereof.

If the water-soluble binder is utilized as the negative electrode binder, a cellulose-based compound may be further utilized to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of 0.1 parts by weight to 3 parts by weight based on 100 parts by weight of the negative electrode active material.

The conductive material is included to provide electrode conductivity and any electrically conductive material may be utilized as a conductive material unless it causes a chemical change. Examples thereof may be a carbon-based material such as natural graphite, artificial graphite, carbon black, acetylene black, Ketjen black, carbon fiber and/or the like; a metal-based material such as a metal powder or a metal fiber of copper, nickel, aluminum, silver, and/or the like; a conductive polymer such as a polyphenylene derivative and/or the like, or one or more mixtures (or combinations) thereof.

The negative electrode current collector may be selected from among a copper foil, a nickel foil, a stainless steel foil, a titanium foil, a nickel foam, a copper foam, a polymer substrate coated with a conductive metal, and one or more combinations thereof.

The positive electrode includes a positive electrode current collector and a positive electrode active material layer on the positive electrode current collector, and the positive electrode active material layer includes a positive electrode active material.

For example, the positive electrode active material may include a lithium nickel-based composite oxide represented by Chemical Formula A1:

Chemical Formula A1 Liₐ₁Niₓ₁M¹_{y1}M²_{z1}O_{2-b1}X_{b1}

In Chemical Formula A1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² may each independently be one or more element selected from among Al, B, Ba, Ca, Ce, Co, Cr, Cu, Fe, Mg, Mn, Mo, Nb, Si, Sr, Ti, V, W, and Zr; and X is one or more element selected from among F, P, and S.

In Chemical Formula A1, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y1≤0.1, and 0≤z1≤0.1.

For example, the positive electrode active material may include a lithium nickel-based composite oxide represented by Chemical Formula A2. The compound represented by Chemical Formula A2 may be referred to be a lithium nickel cobalt-based complex oxide:

Chemical Formula A2 Liₐ₂Niₓ₂Co_{y2}M³_{z2}O_{2-b2}X_{b2}

In Chemical Formula A2, 0.9≤a2≤1.8, 0.7≤x2<1, 0<y2≤0.2, 0≤z2≤0.2, 0.9≤x2+y2+z2≤1.1, and 0≤b2≤0.1, M³ is one or more element selected from among Al, B, Ba, Ca, Ce, Cr, Fe, Mg, Mn, Mo, Nb, Si, Sr, Ti, V, W, and Zr, and X is one or more element selected from among F, P, and S.

In Chemical Formula A2, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

As an example, the positive electrode active material may include a lithium nickel-based composite oxide represented by Chemical Formula A3. The compound of Chemical Formula A3 may be referred to as lithium nickel-cobalt-aluminum oxide or lithium nickel-cobalt-manganese oxide.

Chemical Formula A3 Lia3Niₓ₃Co_{y3}M⁴_{z3}M⁵_{w3}O_{2-b3}X_{b3}

In Chemical Formula A3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is one or more element selected from among Al and Mn, M⁵ is one or more element selected from among B, Ba, Ca, Ce, Cr, Fe, Mg, Mo, Nb, Si, Sr, Ti, V, W, and Zr, and X is one or more element selected from among F, P, and S.

In Chemical Formula A3, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

As an example, the positive electrode active material may include a lithium nickel-based composite oxide represented by Chemical Formula A4. The compound of Chemical Formula A4 may be referred to be a cobalt-free lithium nickel-manganese oxide.

Chemical Formula A4 Liₐ₄Niₓ₄Mn_{y4}M⁶_{z4}O_{2-b4}X_{b4}

In Chemical Formula A4, 0.9≤a2≤1.8, 0.7≤x4<1, 0<y4≤0.2, 0≤z4≤0.2, 0.9≤x4+y4+z4≤1.1, and 0≤b4≤0.1, M⁶ is one or more element selected from among Al, B, Ba, Ca, Ce, Cr, Fe, Mg, Mo, Nb, Si, Sr, Ti, V, W, and Zr, and X is one or more element selected from among F, P, and S.

A content of the positive electrode active material may be 90 wt% to 98 wt% based on a total weight of the positive electrode active material layer.

In some embodiments of the present disclosure, the positive electrode active material layer may optionally include a conductive material and a binder. In this case, each content of the conductive material and the binder may be 1.0 wt% to 5.0 wt%, based on a total weight of the positive electrode active material layer.

The conductive material is utilized to impart conductivity to the negative electrode, and any electrically conductive material may be utilized as a conductive material unless it causes a chemical change in a battery. Examples of the conductive material may include a carbon-based material such as natural graphite, artificial graphite, carbon black, acetylene black, Ketjen black, carbon fiber, and/or the like; a metal-based material of a metal powder or a metal fiber including copper, nickel, aluminum, silver, and/or the like; a conductive polymer such as a polyphenylene derivative; or a mixture thereof.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

The positive electrode current collector may include Al, but is not limited thereto.

The rechargeable lithium battery may further include a separator between the negative electrode and the positive electrode, depending on a type or kind of the rechargeable lithium battery. This separator may be a porous substrate; or may be a composite porous substrate.

The porous substrate may be a substrate including pores, and lithium ions may move through the pores. The porous substrate may be for example may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler and/or an inorganic filler.

Herein, as an example of a rechargeable lithium battery, a cylindrical rechargeable lithium battery is for example described. The drawing schematically shows the structure of a rechargeable lithium battery according to some example embodiments. Referring to the drawing, a rechargeable lithium battery 100 according to some example embodiments includes a battery cell including a positive electrode 114, a negative electrode 112 facing the positive electrode 114, a separator 113 between the positive electrode 114 and the negative electrode 112, and an electrolyte impregnating the positive electrode 114, the negative electrode 112, and the separator 113, a battery case 120 housing the battery cell, and a sealing member 140 sealing the battery case 120.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, examples and comparative examples of the present disclosure will be described. The following example is only an example of the present disclosure, and the present disclosure is not limited to the following examples.

### EXAMPLES

### Preparation of Electrolyte for Rechargeable Lithium Battery Cells

### Preparation Example 1

As for a non-aqueous organic solvent, a carbonate-based solvent was prepared by mixing ethylene carbonate (EC): ethylmethyl carbonate (EMC): dimethyl carbonate (DMC) = 20:10:70 in a volume ratio.

To the non-aqueous organic solvent, 1.5 M lithium salt (LiPF₆) was added, and 1 wt% of the first additive represented by Chemical Formula 1-1-1 (CAS No. 16415-09-1) and 0.1 wt% of the second additive represented by Chemical Formula 2-1-1 (CAS No. 280-57-9) were added thereto to finally prepare an electrolyte for a rechargeable lithium battery.

Herein, a content (wt%) of each of the additives refers to the content (wt%) of each of the additives based on 100 wt% of the electrolyte for a rechargeable lithium battery. The same was applied hereinafter.

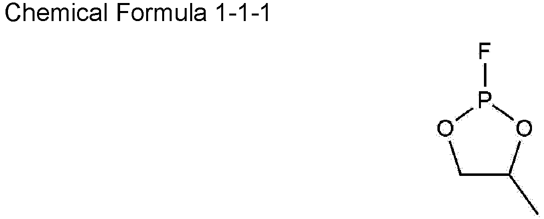

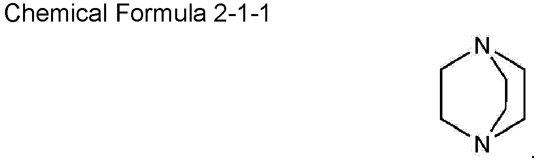

### Preparation Example 2

An electrolyte for a rechargeable lithium battery was manufactured in substantially the same manner as in Preparation Example 1 except that 1 wt% of the first additive represented by Chemical Formula 1-1-1 (CAS No. 16415-09-1) and 0.5 wt% of the second additive represented by Chemical Formula 2-1-1 (CAS No. 280-57-9) were utilized as the additives.

### Preparation Example 3

An electrolyte for a rechargeable lithium battery was manufactured in substantially the same manner as in Preparation Example 1 except that 1 wt% of the first additive represented by Chemical Formula 1-1-1 (CAS No. 16415-09-1) and 1.0 wt% of the second additive represented by Chemical Formula 2-1-1 (CAS No. 280-57-9) were utilized as the additives.

### Preparation Example 4

An electrolyte for a rechargeable lithium battery was manufactured in substantially the same manner as in Preparation Example 1 except that 1 wt% of the first additive represented by Chemical Formula 1-1-1 (CAS No. 16415-09-1) and 3.0 wt% of the second additive represented by Chemical Formula 2-1-1 (CAS No. 280-57-9) were utilized as the additives.

### Comparative Preparation Example 1

An electrolyte for a rechargeable lithium battery was manufactured in substantially the same manner as in Preparation Example 1 except that the additives were not utilized at all.

### Comparative Preparation Example 2

An electrolyte for a rechargeable lithium battery was manufactured in substantially the same manner as in Preparation Example 1 except that the first additive represented by Chemical Formula 1-1-1 (CAS No. 16415-09-1) was not utilized, but 0.1 wt% of the second additive represented by Chemical Formula 2-1-1 (CAS No. 280-57-9) were utilized as the additive.

### Comparative Preparation Example 3

An electrolyte for a rechargeable lithium battery was manufactured in substantially the same manner as in Preparation Example 1 except that 1 wt% of the first additive represented by Chemical Formula 1-1-1 (CAS No. 16415-09-1) was utilized as the additive, but the second additive represented by Chemical Formula 2-1-1 (CAS No. 280-57-9) was not utilized.

### Manufacture of Rechargeable Lithium Battery Cells

### Example 1

LiNi_{0.8}Co_{0.1}Al_{0.1}O₂ as a positive electrode active material, polyvinylidene fluoride as a binder, and Ketjen black as a conductive material were mixed respectively in a weight ratio of 97:2:1, and then, dispersed in N-methyl pyrrolidone to prepare positive electrode active material slurry.

The positive electrode active material slurry was coated on a 14 micrometer (µm)-thick Al foil, dried at 110 °C, and pressed to manufacture a positive electrode.

A mixture of the first negative electrode active material and second negative electrode active material in a weight ratio of 1:99 was utilized as the negative electrode active material, and the negative electrode active material, a styrene-butadiene rubber binder, and carboxylmethyl cellulose in a weight ratio of 97:1:2 were dispersed in distilled water to prepare negative electrode active material slurry.

The first negative electrode active material included a core (Si-C composite) containing artificial graphite and silicon particles, and coal pitch coated on the surface of the core.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, and each rechargeable lithium battery cell was manufactured by injecting the electrolyte for a rechargeable lithium battery of Preparation Example 1.

### Example 2

A rechargeable lithium battery cell was manufactured in substantially the same manner as in Example 1 except that a mixture of the first negative electrode active material : the second negative electrode active material in a weight ratio of 20 : 80 was utilized as the negative electrode active material.

### Example 3

A rechargeable lithium battery cell was manufactured in substantially the same manner as in Example 1 except that a mixture of the first negative electrode active material : the second negative electrode active material in a weight ratio of 40 : 60 was utilized as the negative electrode active material.

### Example 4

A rechargeable lithium battery cell was manufactured in substantially the same manner as in Example 1 except that a mixture of the first negative electrode active material : the second negative electrode active material in a weight ratio of 60 : 50 was utilized as the negative electrode active material.

### Example 5

A rechargeable lithium battery cell was manufactured in substantially the same manner as in Example 1 except that the electrolyte for a rechargeable lithium battery according to Preparation Example 2 was utilized.

### Example 6

A rechargeable lithium battery cell was manufactured in substantially the same manner as in Example 2 except that the electrolyte for a rechargeable lithium battery according to Preparation Example 2 was utilized.

### Example 7

A rechargeable lithium battery cell was manufactured in substantially the same manner as in Example 3 except that the electrolyte for a rechargeable lithium battery according to Preparation Example 2 was utilized.

### Example 8

A rechargeable lithium battery cell was manufactured in substantially the same manner as in Example 4 except that the electrolyte for a rechargeable lithium battery according to Preparation Example 2 was utilized.

### Example 9

A rechargeable lithium battery cell was manufactured in substantially the same manner as in Example 1 except that the electrolyte for a rechargeable lithium battery according to Preparation Example 3 was utilized.

### Example 10

A rechargeable lithium battery cell was manufactured in substantially the same manner as in Example 2 except that the electrolyte for a rechargeable lithium battery according to Preparation Example 3 was utilized.

### Example 11

A rechargeable lithium battery cell was manufactured in substantially the same manner as in Example 3 except that the electrolyte for a rechargeable lithium battery according to Preparation Example 3 was utilized.

### Example 12

A rechargeable lithium battery cell was manufactured in substantially the same manner as in Example 4 except that the electrolyte for a rechargeable lithium battery according to Preparation Example 3 was utilized.

### Example 13

A rechargeable lithium battery cell was manufactured in substantially the same manner as in Example 1 except that the electrolyte for a rechargeable lithium battery according to Preparation Example 4 was utilized.

### Example 14

A rechargeable lithium battery cell was manufactured in substantially the same manner as in Example 2 except that the electrolyte for a rechargeable lithium battery according to Preparation Example 4 was utilized.

### Example 15

A rechargeable lithium battery cell was manufactured in substantially the same manner as in Example 3 except that the electrolyte for a rechargeable lithium battery according to Preparation Example 4 was utilized.

### Example 16

A rechargeable lithium battery cell was manufactured in substantially the same manner as in Example 4 except that the electrolyte for a rechargeable lithium battery according to Preparation Example 4 was utilized.

### Comparative Example 1

A rechargeable lithium battery cell was manufactured in substantially the same manner as in Example 1 except that the electrolyte for a rechargeable lithium battery according to Comparative Preparation Example 1 was utilized.

### Comparative Example 2

A rechargeable lithium battery cell was manufactured in substantially the same manner as in Example 2 except that the electrolyte for a rechargeable lithium battery according to Comparative Preparation Example 1 was utilized.

### Comparative Example 3

A rechargeable lithium battery cell was manufactured in substantially the same manner as in Example 3 except that the electrolyte for a rechargeable lithium battery according to Comparative Preparation Example 1 was utilized.

### Comparative Example 4

A rechargeable lithium battery cell was manufactured in substantially the same manner as in Example 4 except that the electrolyte for a rechargeable lithium battery according to Comparative Preparation Example 1 was utilized.

### Comparative Example 5

A rechargeable lithium battery cell was manufactured in substantially the same manner as in Example 1 except that the electrolyte for a rechargeable lithium battery according to Comparative Preparation Example 2 was utilized.

### Comparative Example 6

A rechargeable lithium battery cell was manufactured in substantially the same manner as in Example 2 except that the electrolyte for a rechargeable lithium battery according to Comparative Preparation Example 2 was utilized.

### Comparative Example 7

A rechargeable lithium battery cell was manufactured in substantially the same manner as in Example 3 except that the electrolyte for a rechargeable lithium battery according to Comparative Preparation Example 2 was utilized.

### Comparative Example 8

A rechargeable lithium battery cell was manufactured in substantially the same manner as in Example 4 except that the electrolyte for a rechargeable lithium battery according to Comparative Preparation Example 2 was utilized.

### Comparative Example 9

A rechargeable lithium battery cell was manufactured in substantially the same manner as in Example 1 except that the electrolyte for a rechargeable lithium battery according to Comparative Preparation Example 3 was utilized.

### Comparative Example 10

A rechargeable lithium battery cell was manufactured in substantially the same manner as in Example 2 except that the electrolyte for a rechargeable lithium battery according to Comparative Preparation Example 3 was utilized.

### Comparative Example 11

A rechargeable lithium battery cell was manufactured in substantially the same manner as in Example 3 except that the electrolyte for a rechargeable lithium battery according to Comparative Preparation Example 3 was utilized.

### Comparative Example 12

A rechargeable lithium battery cell was manufactured in substantially the same manner as in Example 4 except that the electrolyte for a rechargeable lithium battery according to Comparative Preparation Example 3 was utilized.

### Evaluation Example 1: DC-Internal Resistance (DC-IR) Evaluation before and after High-temperature Driving

Each of the rechargeable lithium battery cells was subjected to initial formation in the following process. The cells were charged at a constant current to a voltage of 4.2 volt (V) at a current rate of 0.2 coulomb (C) and subsequently, discharged at a constant current at 0.2 C to a voltage of 2.8 V at 45 °C. Subsequently, the cells were constant current-charged to a voltage of 4.2 V at a current rate of 0.5 C and constant voltage-charged to 0.05 C at 4.2 V. Then, the cells were constant current-discharged to a voltage of 2.8 V at 0.5 C.

### Formation Step

After the formation step (process), the rechargeable lithium battery cells were constant current-charged to a voltage of 4.2 V at a current rate of 1.0 C and constant voltage-charged at 4.2 V to 0.05 C at 45 °C. Subsequently, the cells were discharged to a voltage of 2.8 V at a constant current of 1.0 C, and this charge and discharge cycle was 300 times repeated.

A ratio of direct current (DC) resistance at the 300^{th} cycle of the rechargeable lithium battery cells to the initial DC resistance (a resistance increase rate according to Equation 1) was calculated, and the results are shown in Table 1. resistance increase rate (ΔDC-IR) = 100 * ( DC-IR after 300 cycles at 45 °C)/(initial DC-IR)

Herein, DC resistance (DC-IR) was calculated from a current difference and a voltage difference, if different currents were applied, and specifically, calculated from data at 18 seconds and 23 seconds obtained according to ΔR =ΔV/ΔI after constant current-discharging at 10 ampere (A) for 10 seconds, at 1 A for 10 seconds, and at 10 A for 4 seconds in the initial full charge state.

**Table 1**

| | Negative electrode active material | Electrolyte | | Evaluation of battery cells | | |
|---|---|---|---|---|---|---|
| | First : Second = [w:w] | Content of first additive [wt%] | Content of second additive [wt%] | Initial DC-IR | High-temperature cycle-life capacity retention @ 45 °C, 300 cy (%) | DC-IR increase rate after high-temperature cycle-life @ 45 °C, 300 cy (%) |
| Comparative Example 1 | 1 | 0 | 0 | 13.4 | 76.3 | 210.7 |
| Comparative Example 2 | 20 | 0 | 0 | 24.1 | 66.4 | 337.1 |
| Comparative Example 3 | 40 | 0 | 0 | 30.8 | 60.3 | 379.3 |
| Comparative Example 4 | 60 | 0 | 0 | 52.3 | 51.9 | 442.5 |
| Comparative Example 5 | 1 | 0 | 0.1 | 14.7 | 68.7 | 231.8 |
| Comparative Example 6 | 20 | 0 | 0.1 | 26.5 | 59.7 | 370.8 |
| Comparative Example 7 | 40 | 0 | 0.1 | 33.9 | 54.2 | 417.2 |
| Comparative Example 8 | 60 | 0 | 0.1 | 57.5 | 46.7 | 486.7 |
| Comparative Example 9 | 1 | 1 | 0 | 14.3 | 72.5 | 225.4 |
| Comparative Example 10 | 20 | 1 | 0 | 25.8 | 63.1 | 360.7 |
| Comparative Example 11 | 40 | 1 | 0 | 33.0 | 57.3 | 405.8 |
| Comparative Example 12 | 60 | 1 | 0 | 55.9 | 49.3 | 473.4 |
| Example 1 | 1 | 1 | 0.1 | 12.6 | 81.6 | 160.1 |
| Example 2 | 20 | 1 | 0.1 | 22.7 | 71.0 | 256.2 |
| Example 3 | 40 | 1 | 0.1 | 29.0 | 64.5 | 288.2 |
| Example 4 | 60 | 1 | 0.1 | 49.1 | 55.5 | 336.3 |
| Example 5 | 1 | 1 | 0.5 | 10.7 | 96.9 | 107.5 |
| Example 6 | 20 | 1 | 0.5 | 19.3 | 84.3 | 171.9 |
| Example 7 | 40 | 1 | 0.5 | 24.7 | 76.6 | 193.4 |
| Example 8 | 60 | 1 | 0.5 | 41.8 | 65.9 | 225.7 |
| Example 9 | 1 | 1 | 1 | 11.7 | 88.5 | 151.7 |
| Example 10 | 20 | 1 | 1 | 21.0 | 77.0 | 242.7 |
| Example 11 | 40 | 1 | 1 | 26.8 | 69.9 | 273.1 |
| Example 12 | 60 | 1 | 1 | 45.5 | 60.2 | 318.6 |
| Example 13 | 1 | 1 | 3 | 12.3 | 84.7 | 185.4 |
| Example 14 | 20 | 1 | 3 | 22.2 | 73.7 | 296.7 |
| Example 15 | 40 | 1 | 3 | 28.4 | 66.9 | 333.7 |
| Example 16 | 60 | 1 | 3 | 48.1 | 57.6 | 389.4 |

Referring to Table 1, the examples, compared with the comparative examples, exhibited relatively high energy density; and were suppressed or protected from an increase in resistance at room temperature and/or a high temperature and retained (e.g., secured) desire or suitable cycle-life characteristics.

Accordingly, the rechargeable lithium battery cells to which a mixture of a SiC composite and a carbon-based compound separately therefrom was applied as a negative electrode active material, exhibited high energy density; and in addition, to which an electrolyte including two types (kinds) of additives was applied, were suppressed or protected from an increase in resistance at room temperature and/or a high temperature and secured desire or suitable cycle-life characteristics.

### Description of Symbols

- 100:: rechargeable lithium battery
- 112:: negative electrode
- 113:: separator
- 114:: positive electrode
- 120:: battery case
- 140:: sealing member

## Claims

1. A rechargeable lithium battery (100), comprising
a positive electrode (114),
a negative electrode (112), and
an electrolyte,
the electrolyte comprising
a non-aqueous organic solvent,
a lithium salt,
a first additive, and
a second additive,
the first additive comprising a compound represented by Chemical Formula 1,
the second additive comprising a compound represented by Chemical Formula 2, a derivative thereof, or an adduct thereof,
the negative electrode (112) comprising
a first negative electrode active material and
a second negative electrode active material,
the first negative electrode active material comprising
a Si-C composite and
a first carbon-based negative electrode active material,
the Si-C composite comprising a Si-based active material, and
the second negative electrode active material comprising a second carbon-based negative electrode active material: 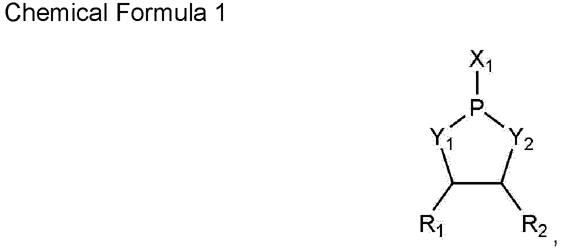
wherein, in Chemical Formula 1,
X₁ is a halogen atom;
Y₁ and Y₂ are each independently O or S; and
R₁ and R₂ are each independently H, a halogen atom, a substituted or unsubstituted C1 to C10 alkyl group, a vinyl group, a substituted or unsubstituted C6 to C10 aryl group, or a substituted or unsubstituted C2 to C10 heteroaryl group comprising a hetero atom that is N, O, or P,
wherein "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group; 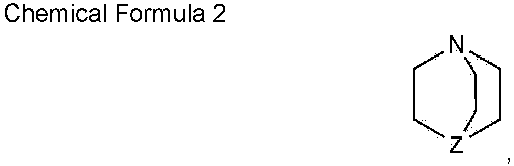 and
wherein, in Chemical Formula 2,
Z is N or CH.

2. The rechargeable lithium battery of claim 1, wherein
X¹ is a fluorine atom.

3. The rechargeable lithium battery of claim 1 or 2, wherein
Y¹ and Y² are simultaneously O.

4. The rechargeable lithium battery of claim 1, wherein
the first additive is represented by Chemical Formula 1-1-1:

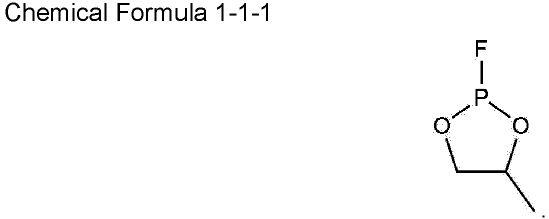

5. The rechargeable lithium battery of any one of the preceding claims, wherein
an amount of the first additive in 100 wt% of the electrolyte is 0.05 to 3 wt%.

6. The rechargeable lithium battery of any one of the preceding claims, wherein
the second additive comprises at least one selected from among a compound represented by Chemical Formula 2-1-1, and a compound represented by Chemical Formula 2-1-2represented by Chemical Formula 2-2-1, a compound represented by Chemical Formula 2-2-2, a compound represented by Chemical Formula 2-3-1, and a compound represented by Chemical Formula 2-3-2:

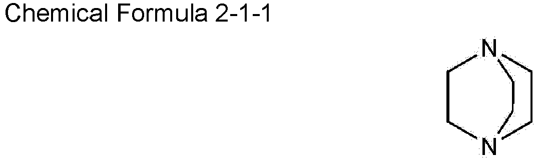

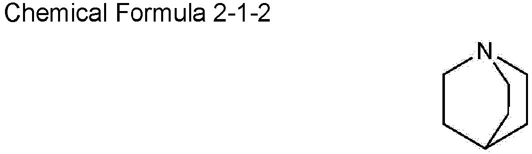

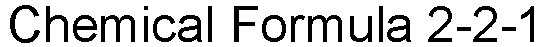

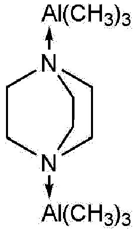

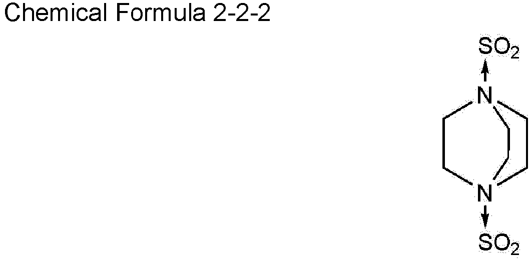

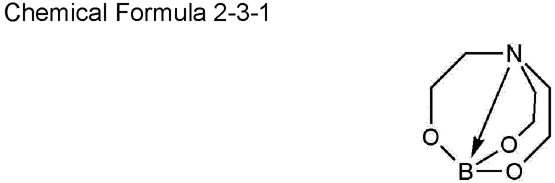

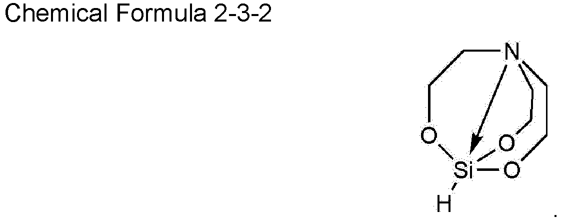

7. The rechargeable lithium battery of any one of the preceding claims, wherein
an amount of the second additive in 100 wt% of the electrolyte is 0.05 to 3 wt%.

8. The rechargeable lithium battery of any one of the preceding claims, wherein
a weight ratio of the first additive and the second additive is 1:0.1 to 1:3

9. The rechargeable lithium battery of any one of the preceding claims, wherein
the non-aqueous organic solvent comprises at least one of a carbonate-based solvent, an ester-based solvent, an ether-based solvent, a ketone-based solvent, an alcohol-based solvent, and an aprotic solvent.

10. The rechargeable lithium battery of claim 9, wherein
the non-aqueous organic solvent comprises a cyclic carbonate and a chain carbonate in a volume ratio of 5:95 to 50:50.

11. The rechargeable lithium battery of any one of the preceding claims, wherein
a weight ratio of the first negative electrode active material and the second negative electrode active material is 1 : 99 to 99 : 1.

12. The rechargeable lithium battery of any one of the preceding claims, wherein
an average particle diameter of the Si-based active material is 50 nanometer (nm) to 200 nm measured through a laser diffraction method.

13. The rechargeable lithium battery of any one of the preceding claims, wherein
the first carbon-based negative electrode active material is crystalline carbon and/or
the second carbon-based negative electrode active material is crystalline carbon.

14. The rechargeable lithium battery of any one of the preceding claims, wherein
a weight ratio of the Si-based active material and the first carbon-based negative electrode active material is 1:99 to 60:40.

15. The rechargeable lithium battery of any one of the preceding claims, wherein
an average particle diameter of the second carbon-based negative electrode active material is 5 micrometer (µm) to 30 µm measured through a laser diffraction method.

## Patentansprüche

1. Wiederaufladbare Lithiumbatterie (100), umfassend eine positive Elektrode (114),
eine negative Elektrode (112), und
einen Elektrolyten,
wobei der Elektrolyt Folgendes umfasst
ein nicht wässriges organisches Lösungsmittel,
ein Lithiumsalz,
ein erstes Additiv, und
ein zweites Additiv,
wobei das erste Additiv eine durch die chemische Formel 1 dargestellte Verbindung umfasst,
wobei das zweite Additiv eine durch die chemische Formel 2 dargestellte Verbindung, ein Derivat davon oder ein Addukt davon umfasst,
wobei die negative Elektrode (112) Folgendes umfasst
ein erstes Aktivmaterial für die negative Elektrode und
ein zweites Aktivmaterial für die negative Elektrode,
wobei das erste Aktivmaterial für die negative Elektrode Folgendes umfasst
einen Si-C-Verbund und
ein erstes Aktivmaterial für die negative Elektrode auf Kohlenstoffbasis,
wobei der Si-C-Verbund ein Aktivmaterial auf Si-Basis umfasst, und
wobei das zweite Aktivmaterial für die negative Elektrode ein zweites Aktivmaterial für die negative Elektrode auf Kohlenstoffbasis umfasst: 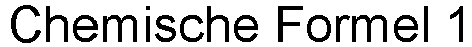 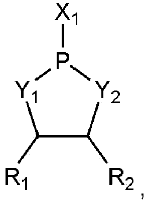
wobei in der chemischen Formel 1
X₁ ein Halogenatom ist;
Y₁ und Y₂ jeweils unabhängig O oder S sind; und
R₁ und R₂ jeweils unabhängig H, ein Halogenatom, eine substituierte oder unsubstituierte C1- bis C10-Alkylgruppe, eine Vinylgruppe, eine substituierte oder unsubstituierte C6- bis C10-Arylgruppe oder eine substituierte oder unsubstituierte C2-bis C10-Heteroarylgruppe, umfassend ein Heteroatom, das N, O oder P ist, sind,
wobei sich "substituiert" auf den Ersatz von Wasserstoff einer Verbindung durch einen Substituenten bezieht, der ausgewählt ist aus einem Deuterium, einem Halogen, einer Hydroxylgruppe, einer Aminogruppe, einer substituierten oder unsubstituierten C1- bis C30-Amingruppe, einer Nitrogruppe, einer substituierten oder unsubstituierten C1- bis C40-Silylgruppe, einer C1- bis C30-Alkylgruppe, einer C1- bis C10-Alkylsilylgruppe, einer C6- bis C30-Arylsilylgruppe, einer C3- bis C30-Cycloalkylgruppe, einer C3- bis C30-Heterocycloalkylgruppe, einer C6- bis C30-Arylgruppe, einer C2- bis C30-Heteroarylgruppe, einer C1- bis C20-Alkoxygruppe, einer C1- bis C10-Fluoralkylgruppe und einer Cyanogruppe; 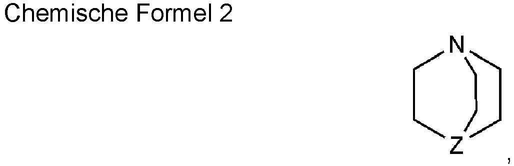 und
wobei in der chemischen Formel 2
Z N oder CH ist.

2. Wiederaufladbare Lithiumbatterie nach Anspruch 1, wobei
X¹ ein Fluoratom ist.

3. Wiederaufladbare Lithiumbatterie nach Anspruch 1 oder 2, wobei
Y¹ und Y² gleichzeitig O sind.

4. Wiederaufladbare Lithiumbatterie nach Anspruch 1, wobei
das erste Additiv durch die chemische Formel 1-1-1 dargestellt ist:

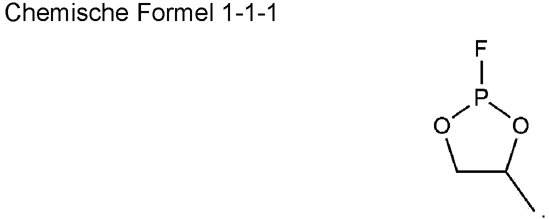

5. Wiederaufladbare Lithiumbatterie nach einem der vorhergehenden Ansprüche, wobei
eine Menge des ersten Additivs in 100 Gew.-% des Elektrolyten 0,05 bis 3 Gew.-% beträgt.

6. Wiederaufladbare Lithiumbatterie nach einem der vorhergehenden Ansprüche, wobei
das zweite Additiv mindestens eine umfasst, die ausgewählt ist aus einer durch die chemische Formel 2-1-1 dargestellten Verbindung und einer durch die chemische Formel 2-1-2 dargestellten Verbindung, dargestellt durch die chemische Formel 2-2-1, einer durch die chemische Formel 2-2-2 dargestellten Verbindung, einer durch die chemische Formel 2-3-1 dargestellten Verbindung und einer durch die chemische Formel 2-3-2 dargestellten Verbindung:

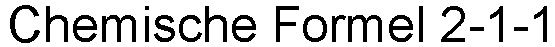

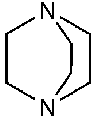

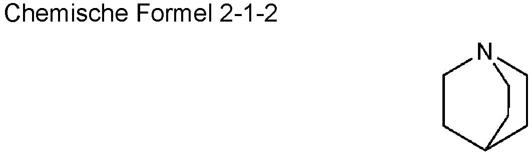

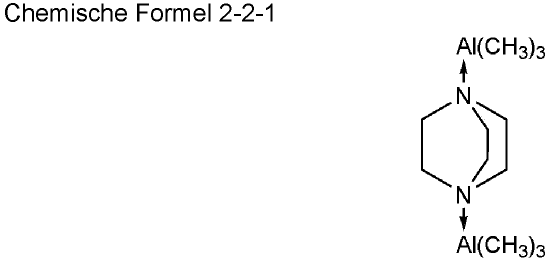

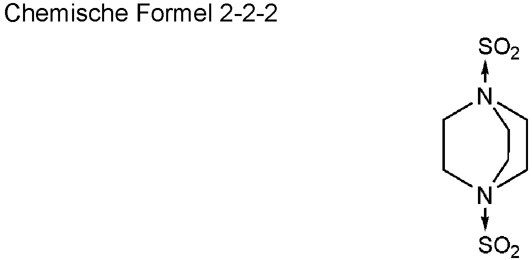

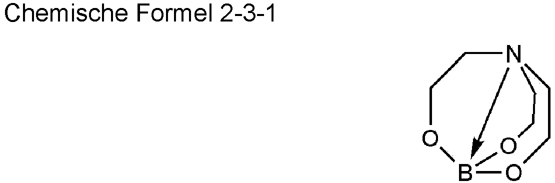

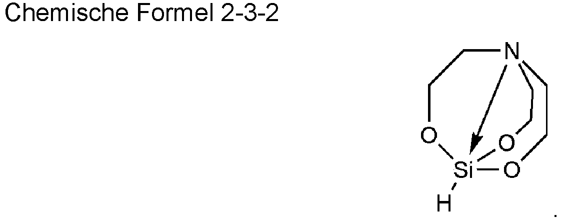

7. Wiederaufladbare Lithiumbatterie nach einem der vorhergehenden Ansprüche, wobei
eine Menge des zweiten Additivs in 100 Gew.-% des Elektrolyten 0,05 bis 3 Gew.-% beträgt.

8. Wiederaufladbare Lithiumbatterie nach einem der vorhergehenden Ansprüche, wobei
ein Gewichtsverhältnis des ersten Additivs und des zweiten Additivs 1:0,1 bis 1:3 beträgt.

9. Wiederaufladbare Lithiumbatterie nach einem der vorhergehenden Ansprüche, wobei
das nicht wässrige organische Lösungsmittel mindestens eines von einem Lösungsmittel auf Carbonatbasis, einem Lösungsmittel auf Esterbasis, einem Lösungsmittel auf Etherbasis, einem Lösungsmittel auf Ketonbasis, einem Lösungsmittel auf Alkoholbasis und einem aprotischen Lösungsmittel umfasst.

10. Wiederaufladbare Lithiumbatterie nach Anspruch 9, wobei
das nicht wässrige organische Lösungsmittel ein cyclisches Carbonat und ein Kettencarbonat in einem Volumenverhältnis von 5:95 bis 50:50 umfasst.

11. Wiederaufladbare Lithiumbatterie nach einem der vorhergehenden Ansprüche, wobei
ein Gewichtsverhältnis des ersten Aktivmaterials für die negative Elektrode und des zweiten Aktivmaterials für die negative Elektrode 1:99 bis 99:1 beträgt.

12. Wiederaufladbare Lithiumbatterie nach einem der vorhergehenden Ansprüche, wobei
ein durchschnittlicher Partikeldurchmesser des Aktivmaterials auf Si-Basis 50 Nanometer (nm) bis 200 nm, gemessen mit einem Laserbeugungsverfahren, beträgt.

13. Wiederaufladbare Lithiumbatterie nach einem der vorhergehenden Ansprüche, wobei
das erste Aktivmaterial für die negative Elektrode auf Kohlenstoffbasis kristalliner Kohlenstoff ist und/oder
das zweite Aktivmaterial für die negative Elektrode auf Kohlenstoffbasis kristalliner Kohlenstoff ist.

14. Wiederaufladbare Lithiumbatterie nach einem der vorhergehenden Ansprüche, wobei
ein Gewichtsverhältnis des Aktivmaterials auf Si-Basis und des ersten Aktivmaterials für die negative Elektrode auf Kohlenstoffbasis 1:99 bis 60:40 beträgt.

15. Wiederaufladbare Lithiumbatterie nach einem der vorhergehenden Ansprüche, wobei
ein durchschnittlicher Partikeldurchmesser des zweiten Aktivmaterials für die negative Elektrode auf Kohlenstoffbasis 5 Mikrometer (µm) bis 30 µm, gemessen mit einem Laserbeugungsverfahren, beträgt.

## Revendications

1. Batterie au lithium rechargeable (100), comprenant une électrode positive (114),
une électrode négative (112), et
un électrolyte,
l'électrolyte comprenant
un solvant organique non aqueux,
un sel de lithium,
un premier additif, et
un deuxième additif,
le premier additif comprenant un composé représenté par la formule chimique 1,
le deuxième additif comprenant un composé représenté par la formule chimique 2, un dérivé de celui-ci ou un adduit de celui-ci,
l'électrode négative (112) comprenant
un premier matériau actif d'électrode négative et
un deuxième matériau actif d'électrode négative,
le premier matériau actif d'électrode négative comprenant
un composite Si-C et
un premier matériau actif d'électrode négative à base de carbone,
le composite Si-C comprenant un matériau actif à base de Si, et
le deuxième matériau actif d'électrode négative comprenant un deuxième matériau actif d'électrode négative à base de carbone : 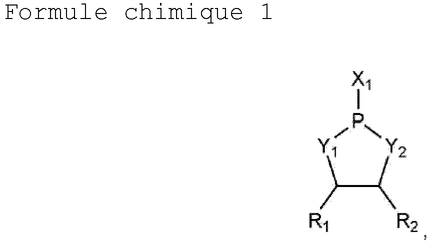
dans laquelle, dans la formule chimique 1,
X₁ est un atome d'halogène ;
Y₁ et Y₂ sont chacun indépendamment O ou S ; et
R₁ et R₂ sont chacun indépendamment H, un atome d'halogène, un groupe alkyle en C1 à C10 substitué ou non substitué, un groupe vinyle, un groupe aryle en C6 à C10 substitué ou non substitué, ou un groupe hétéroaryle en C2 à C10 substitué ou non substitué comprenant un atome hétéro qui est N, O ou P,
dans laquelle « substitué » fait référence au remplacement de l'hydrogène d'un composé par un substituant sélectionné parmi un deutérium, un halogène, un groupe hydroxyle, un groupe amino, un groupe amine en C1 à C30 substitué ou non substitué, un groupe nitro, un groupe silyle en C1 à C40 substitué ou non substitué, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10 et un groupe cyano ; 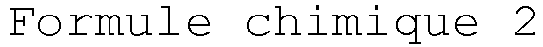 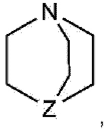 et
dans laquelle, dans la formule chimique 2,
Z est N ou CH.

2. Batterie au lithium rechargeable selon la revendication 1, dans laquelle
X₁ est un atome de fluor.

3. Batterie au lithium rechargeable selon la revendication 1 ou 2, dans laquelle
Y₁ et Y₂ sont simultanément O.

4. Batterie au lithium rechargeable selon la revendication 1, dans laquelle
le premier additif est représenté par la formule chimique 1-1-1 :

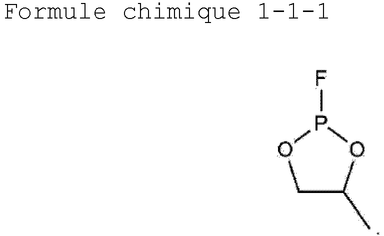

5. Batterie au lithium rechargeable selon l'une quelconque des revendications précédentes, dans laquelle
une quantité du premier additif dans 100 % en poids de l'électrolyte est de 0,05 à 3 % en poids.

6. Batterie au lithium rechargeable selon l'une quelconque des revendications précédentes, dans laquelle
le deuxième additif comprend au moins l'un sélectionné parmi un composé représenté par la formule chimique 2-1-1, et un composé représenté par la formule chimique 2-1-2, un composé représenté par la formule chimique 2-2-1, un composé représenté par la formule chimique 2-2-2, un composé représenté par la formule chimique 2-3-1 et un composé représenté par la formule chimique 2-3-2 :

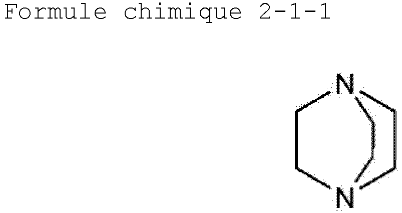

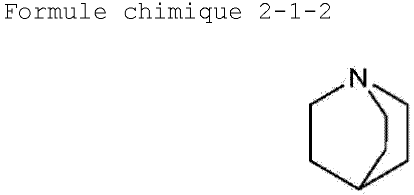

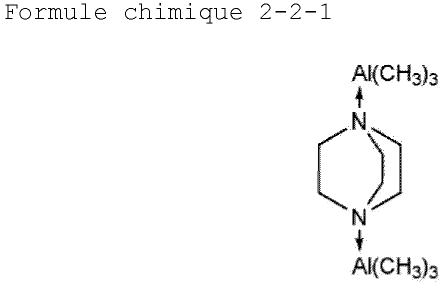

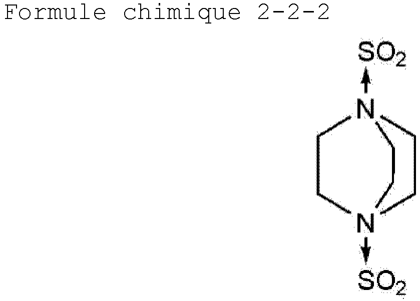

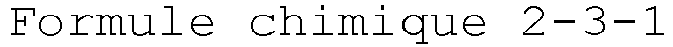

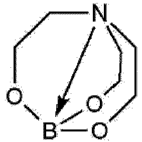

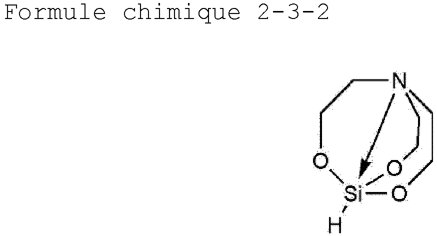

7. Batterie au lithium rechargeable selon l'une quelconque des revendications précédentes, dans laquelle
une quantité du deuxième additif dans 100 % en poids de l'électrolyte est de 0,05 à 3 % en poids.

8. Batterie au lithium rechargeable selon l'une quelconque des revendications précédentes, dans laquelle
un rapport en poids entre le premier additif et le deuxième additif est de 1:0,1 à 1:3.

9. Batterie au lithium rechargeable selon l'une quelconque des revendications précédentes, dans laquelle
le solvant organique non aqueux comprend au moins l'un d'un solvant à base de carbonate, d'un solvant à base d'ester, d'un solvant à base d'éther, d'un solvant à base de cétone, d'un solvant à base d'alcool et d'un solvant aprotique.

10. Batterie au lithium rechargeable selon la revendication 9, dans laquelle
le solvant organique non aqueux comprend un carbonate cyclique et un carbonate à chaîne dans un rapport volumique de 5:95 à 50:50.

11. Batterie au lithium rechargeable selon l'une quelconque des revendications précédentes, dans laquelle
un rapport en poids entre le premier matériau actif d'électrode négative et le deuxième matériau actif d'électrode négative est de 1:99 à 99:1.

12. Batterie au lithium rechargeable selon l'une quelconque des revendications précédentes, dans laquelle
un diamètre de particule moyen du matériau actif à base de Si est de 50 nanomètres (nm) à 200 nm mesuré par un procédé de diffraction laser.

13. Batterie au lithium rechargeable selon l'une quelconque des revendications précédentes, dans laquelle
le premier matériau actif d'électrode négative à base de carbone est du carbone cristallin et/ou
le deuxième matériau actif d'électrode négative à base de carbone est du carbone cristallin.

14. Batterie au lithium rechargeable selon l'une quelconque des revendications précédentes, dans laquelle
un rapport en poids entre le matériau actif à base de Si et le premier matériau actif d'électrode négative à base de carbone est de 1:99 à 60:40.

15. Batterie au lithium rechargeable selon l'une quelconque des revendications précédentes, dans laquelle
un diamètre de particule moyen du deuxième matériau actif d'électrode négative à base de carbone est de 5 micromètres (µm) à 30 µm mesuré par un procédé de diffraction laser.
